# EUROPÄISCHE PATENTSCHRIFT

(11) **EP 2 191 933 B1**
(45) Veröffentlichungstag und Bekanntmachung des Hinweises auf die Patenterteilung: **12.10.2011**
(21) Anmeldenummer: 09013699.5
(22) Anmeldetag: 30.10.2009
(51) Int. Cl.: B23Q 3/155, B23Q 3/157, B23Q 5/027, B23Q 5/34

(54) **Werkzeugwechsler für Werkzeugmaschinen**
Tool changer for machine tools
Changeur d'outil pour machines-outils

(30) Priorität: 27.11.2008 DE 102008059422
(43) Veröffentlichungstag der Anmeldung: 02.06.2010
(73) Patentinhaber: Deckel Maho Seebach GmbH, 99846 Seebach (DE)
(72) Erfinder: Tüllmann, Udo, Dr., 99817 Eisenach (DE); Kümmel, Stephan, 06463 Falkenstein/Harz (DE); Kretzschmar, Andreas, 02733 Cunewalde (DE)
(74) Vertreter: Beetz & Partner

(56) Entgegenhaltungen:
- EP-A2- 0 035 952
- DE-A1- 4 300 745
- DE-A1- 19 536 514
- US-A1- 2002 043 126

## Beschreibung

Die Erfindung betrifft einen Werkzeugwechsler für Werkzeugmaschinen der im Oberbegriff des Patentanspruchs 1 angegebenen Gattung.

Bei modernen spanenden Werkzeugmaschinen sind verschiedenartige Werkzeug-Wechselsysteme üblich, die einen meist außerhalb des eigentlichen Arbeitsraumes angeordneten Werkzeugspeicher und einen Werkzeugwechsler aufweisen. Mit diesen Systemen werden automatische Werkzeugwechsel durchgeführt, um die Nebenzeiten der jeweiligen Bearbeitungsmaschine, insbesondere die sog. Span-zu-Span-Zeiten, zu verringern. Insbesondere sollen die eigentlichen Werkzeug-Wechselzeiten minimiert werden, die einen er heblichen Anteil an den Span-zu-Span-Zeiten haben. Um einen Werkzeugwechsel innerhalb einer möglichst kurzen Zeitspanne durchzuführen, werden mehrere Bewegungen von Komponenten des Werkzeugwechslers miteinander kombiniert, beispielsweise eine Absenkbewegung des Werkzeug-Greifers, um das auszuwechselnde Werkzeug aus der zuvor in die Wechselstellung verfahrenen Arbeitsspindel der Werkzeugmaschine zu entnehmen, eine nachfolgende Drehbewegung des Werkzeuggreifers von i.d.R. 180 ° Drehwinkel, um das auszuwechselnde Werkzeug aus der Position unter der Arbeitsspindel zu entfernen und gleichzeitig ein einzuwechselndes Werkzeug in diese Position zu bewegen, und schließlich eine Hubbewegung, um das einzuwechselnde Werkzeug in den Spannkonus der Arbeitsspindel einzuführen. Zweckmäßig verläuft diese kombinierte Hub-Schwenk-Bewegung "in einem Zug" ohne Stillstands- oder Sensor-Auswertezeiten. Zur Erzeugung einer solchen durchgängigen Bewegung werden mechanische Kurvengetriebe eingesetzt, die eine Kurventrommel, einen Antriebsmotor zum Bewegen, insbesondere Verdrehen, der Kurventrommel sowie ein Zwischengetriebe enthalten. Auf dem Trommelmantel sind Kurvenbahnen eingeformt, in die Mitnehmerelemente eingreifen. Durch eine Drehbewegung der Kurventrommel wird eine Tragsäule eines Werkzeug-Greifers um ihre Längsachse verdreht und gleichzeitig in Längsrichtung bewegt, was entsprechende Dreh- und Vertikalbewegungen des Werkzeug-Greifers bewirkt.

Ein besonderes Problem bei der Auslegung von mechanischen Kurvengetrieben ist es, den Durchmesser der Kurventromm el möglichst klein zu halten. Nur mit einem hinreichend kleinen Trommeldurchmesser können sowohl die Beschleunigung als auch die Abbremsung extrem schnell realisiert werden, weil die Trägheitsmomente dieses Hub-Schwenk-Getriebes aufgrund des kleinen Trommeldurchmessers gering sind. Andererseits nimmt bei vermindertem Trommeldurchmesser die Steilheit der Kurven zu, wodurch die Belastung der mechanischen Komponenten erhöht wird.

Bei einem bekannten mechanischen Kurvengetriebe ist auf der oberen Stirnseite einer Kurventrommel eine nutförmige Kurvenbahn ausgebildet, in der ein Mitnehmerzapfen zur Erzeugung einer Hubbewegung der Tragsäule mit dem Werkzeug-Greifer geführt ist. Die Drehbewegung des Greifers wird initiiert durch eine oder mehrere Kurven auf der Mantelfläche der Kurventrommel, die nur eine begrenzte Steilheit haben, was nur durch einen entsprechend großen Trommeldurchmesser von etwa 250 mm erreicht werden kann. Insgesamt ergibt sich ein relativ voluminöses mechanisches Kurvengetriebe und relativ hohe Trägheitsmomente, sodass zur Erzielung kurzer Werkzeug-Wechselzeiten hohe Antriebsleistungen installiert werden müssen. Neben den unerwünscht hohen mechanischen Beanspruchungen erfordert dieses bekannte mechanische Kurvengetriebe auch einen relativ großen Bauraum an der Werkzeugmaschine, wodurch sich die Notwendigkeit ergeben kann, dass die Arbeitsspindel für einen Werkzeugwechsel nach dem Pick-up-Prinzip zum Werkzeugwechsler bzw. dem Werkzeug-Greifer bewegt werden muss. Diese Bewegungen sind besonders bei Werkzeugmaschinen mit großen Achswegen sehr zeitaufwändig, weil diese Maschinen über massive und schwere Schlitteneinheiten verfügen, um trotz der großen Achswege eine hinreichende Steifigkeit beim Spanen zu gewährleisten.

Weiterhin ist aus der DE 43 00 745 A1 ein Werkzeugwechsler für Werkzeugmaschinen bekannt, der zum Verfahren des Werkzeug-Greifers in Axialrichtung eine Kurventrommel aufweist, in deren Mantel eine Hubkurve in Form einer in sich geschlossenen Nut ausgebildet ist. In diese Nut greift ein mit dem Werkzeug-Greifer verbundener Treiber ein. Die Kurventrommel ist mit einem Antriebsmotor gekoppelt und ihre Drehbewegung wird in eine Hub - und Senkbewegung des Werkzeuggreifers umgesetzt. Zum Verdrehen des Werkzeuggreifers dient ein gesondertes Schwenkgetriebe, das ebenfalls vom Antriebsmotor angetrieben wird und eine Kurvenscheibe sowie einen Steuerarm aufweist, der über einen Steuernocken in eine Steuernut in der Kurvenscheibe eingreift. Bei diesem bekannten Wechsler erfolgt somit der Antrieb für die Hub- und Senkbewegungen des Werkzeug-Greifers über die Kurventrommel und der Drehantrieb des Werkzeug-Greifers über die gesonderte Kurvenscheibe, was neben einem relativ großen Platzbedarf auch einen erheblichen technischen Aufwand verlangt.

Aufgabe der Erfindung ist es, einen Werkzeugwechsler für Werkzeugmaschinen zu schaffen, dessen mechanisches Kurvengetriebe technisch einfach und kompakt aufgebaut ist, über geringe Trägheiten verfügt, sodass nur relativ kleine Antriebsleistungen benötigt werden, und schnelle Werkzeugwechsel mit einer Verkürzung der Span-zu-Span-Zeiten ermöglicht.

Diese Aufgabe wird erfindungsgemäß durch die im Patentanspruch 1 angegebenen Merkmale gelöst. Bei dem erfindungsgemäß ausgebildeten Werkzeugwechsler weist die Kurventrommel des mechanischen Kurvengetriebes auf ihrer oberen Stirnseite einen als Treiber wirkenden Mitnehmer für den Drehantrieb des Werkzeug-Greifers und an ihrem Umfang eine Hubkurve für die Hubbewegung des Werkzeug-Greifers auf. Der Mitnehmer greift in ein Malteserrad ein, das auf einer zur Drehachse des Werkzeug-Greifers achsparallelen Welle gelagert ist. Ferner sind die Tragsäule des Werkzeug-Greifers, die Kurventrommel sowie das Malteserrad achsparallel hintereinander angeordnet.

Durch die erfindungsgemäße Anordnung der Getriebeelemente des Hub-Schwenk-Getriebes auf drei zueinander parallelen hintereinander angeordneten Achsen ergibt sich die angestrebte Kompaktheit des mechanischen Getriebes, nämlich die geringe Breite des Werkzeugwechslers, was den Einsatz des erfindungsgemäßen Werkzeugwechslers auch bei geringem Raumangebot an der Maschine aufgrund der langgestreckten schmalen Form ermöglicht. Es wird ein Doppelgreifer eingesetzt, dessen einer Greifer das auszuwechselnde Werkzeug aufnimmt und dessen anderer Greifer das einzuwechselnde Werkzeug enthält. Zur Durchführung der für einen Wechselvorgang erforderlichen Hub- und Senkbewegungen ist der Doppel-Greifer auf einer in Längsrichtung vertikal verfahrbaren Tragsäule befestigt, die eine Stabführung aufweist, welche die zum Werkzeugwechsel erforderliche Hubbewegung ermög licht. Die Tragsäule ist ferner in einer Lagerung aufgenommen, welche eine Drehbewegung des Werkzeug-Greifers um die Säulenachse zum Umschlag der Werkzeuge ermöglicht. Die Hubführung besitzt einen Mitnehmer, der direkt in die auf der Umfangsfläche der Kurventrommel angebrachte Hubkurve eingreift. Dadurch wird die zum Werkzeugwechsel erforderliche Hubbewegung des Werkzeug-Greifers erzeugt und zeitlich zu dessen Drehbewegung synchronisiert. Durch die Anordnung der Hubkurve auf der Umfangsfläche der Kurventrommel kann die Hubkurve eine praktikable Steilheit erhalten und gleichzeitig kann der Durchmesser der Kurventrommel gegenüber dem Stand der Technik erheblich verkleinert werden, z.B. auf 130 mm, was entsprechend verminderte Trägheiten und geringere mechanische Beanspruchungen der Bauteile bewirkt.

Die Drehbewegung des Werkzeug-Greifers wird erfindungsgemäß durch den auch als Treiber bezeichneten Mitnehmer auf der Stirnfläche der Kurventrommel erzeugt. Dieser Mitnehmer greift in Radialschlitze des Malteserrads ein, das auf einer zur Drehachse des Werkzeug-Greifers achsparallelen Welle gelagert ist. Um den Durchmesser der Kurventrommel klein halten zu können, i st die Übersetzung der Malteser-Stufe so gewählt, dass nur eine geringfügige Veränderung der Winkelstrecke von Antrieb zu Antrieb erfolgt. Da der Werkzeug-Greifer jedoch eine Drehung um 180 ° benötigt, die mit einer Malteser-Stufe nicht sinnvoll erzielt werden kann, wird die Drehung des Malteserrades durch ein Zwischengetriebe so übersetzt, dass der Werkzeug-Greifer eine Drehung von 180 ° ausführt. Das Zwischengetriebe besteht aus einem auf dem Malteserrad angeordneten Zahnrad, das mit einem auf der Welle der Kurventrommel separat gelagerten Zahnradsatz kämmt, dessen zweites Zahnrad wiederum ein auf der Drehachse des Werkzeug-Greifers angeordnetes Zahnrad antreibt. Diese Zahnräder sind im

Durchmesser und in der Zähnezahl so bemessen, dass sich insgesamt eine Drehung des Werkzeug-Greifers um 180 ° ergibt.

Die erfindungsgemäße Anordnung minimiert den Platzbedarf für das mechanische Kurvengetriebe sowie die weiteren Komponenten für die Hub- und Schwenkbewegungen des Werkzeug-Greifers durch eine Verminderung des Durchmessers der Kurventrommel und durch die Anordnung der Hubkurve auf der Umfangsfläche der Kurventrommel. Besonders günstige Außenabmessungen des Werkzeugwechslers ergeben sich durch die Hintereinander-Anordnung von Antriebsmotor, Kurventrommel, Zwischengetriebe-Rädern und Tragsäule mit zueinander parallelen, vorzugsweise vertikalen Achsen. Weiterhin ermöglicht das Malteserrad und seine Kopplung mit dem Zwischengetriebe einen ruckfreien Drehantrieb des Werkzeug-Greifers. Durch Vorsehen des Zwischengetriebes für die Drehbewegung des Werkzeug-Greifers kann der benötigte Umfangswinkel für den Antrieb klein gehalten werden, zwischen 45 und 150 ° Umfangswinkel der Kurventrommel, was eine weitergehende Verringerung des Trommeldurchmessers ermöglicht.

Der erfindungsgemäße Werkzeugwechsler kann an der Werkzeugmaschine ortsfest angeordnet sein, d.h. die Tragsäule mit dem an ihrem oberen Ende monierten Werkzeug-Greifer befindet sich ständig in einer bestimmten Position und die für einen Werkzeugwechsel erforderlichen Horizontalbewegungen werden von der Arbeitsspindel ausgeführt.

Bei einer vorteilhaften Ausführung der Erfindung weist der Werkzeugwechsler einen schmalen langgestreckten ortsfesten Unterbau und einen darauf in Längsrichtung verfahrbaren Schlitten auf. Der Schlitten wird von einem Gehäuse gebildet, in dem die Funktionsteile des Werkzeugwechslers untergebracht sind und der durch einen Linearantrieb, z.B. einen Druckmittelzylinder, einen Spindeltrieb od. dgl., verfahren wird. Bei diesem Ausführungsbeispiel werden die für einen Werkzeugwechsel notwendigen relativen Horizontalbewegungen von dem auf dem Schlitten befindlichen Werkzeug-Greifer ausgeführt, wobei daneben auch Horizontalbewegungen der Arbeitsspindel möglich sind.

Eine energetisch besonders günstige und platzsparende Anordnung wird dadurch erreicht, dass der Antriebsmotor hochkant, d.h. in vertikaler Ausrichtung, im Gehäuse des ortsfesten Werkzeugwechslers bzw. des Schlittens achsparallel vor der Kurventrommel angeordnet ist. Dies ermöglicht den Antrieb der Kurventrommel über ein als Vorgelege wirkendes Zahnradpaar und die Anordnung des Malteserrads mit dem Zwischengetriebe im Gehäuse oberhalb des Antriebsmotors und der Kurventrommel.

Im Folgenden wird ein Ausführungsbeispiel des erfindungsgemäßen Werkzeugwechslers für Werkzeugmaschinen anhand der Zeichnung ausführlicher beschrieben. Es zeigen:
- Fig. 1: eine programmgesteuerte Fräsmaschine mit Werkzeug- Wechselsystem in schematischer perspektivischer Darstel- lung;
- Fig. 2: einen Werkzeugwechsler gemäß der Erfindung in schemati- scher perspektivischer Darstellung;
- Fig. 3: getriebetechnische Darstellungen des Werkzeugwechslers nach Fig. 2 in der Ausgangs- und der Endlage;
- Fig. 4: getriebetechnische Darstellungen des Werkzeugwechslers nach Fig. 2 in der Zwischenstellung.

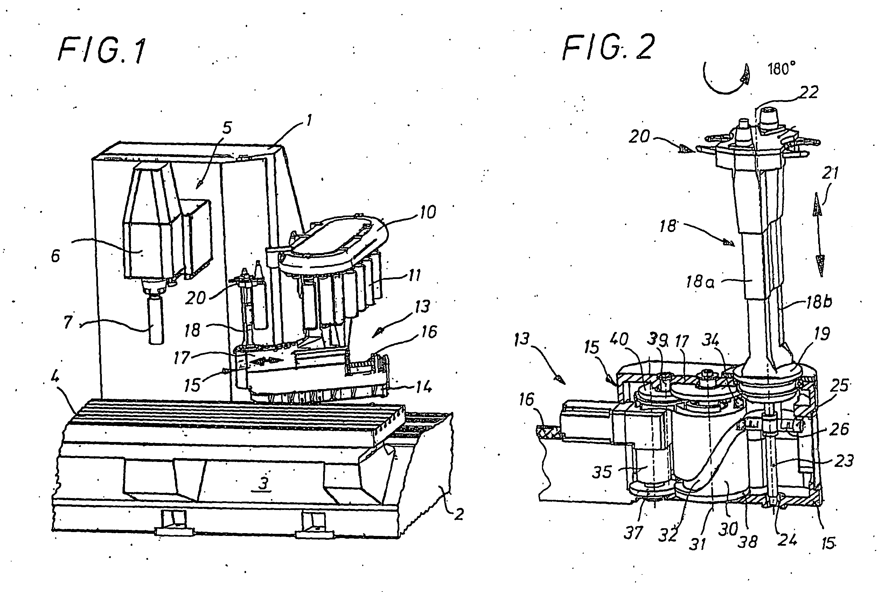

Die in Fig. 1 in perspektivischer Darstellung schematisch dargestellte Fräsmaschine enthält einen Ständer 1 und ein an dessen Frontseite angeordnetes Bett 2, an dessen vorderer Schrägfläche 3 ein Werkstücktisch 4 montiert ist. An der vertikalen Frontseite des Ständers 1 ist eine Bearbeitungseinheit 5 angeordnet, in deren hier vertikal ausgerichteten Fräskopf 6 ein Werkzeug 7 mit herkömmlicher Werkzeugaufnahme eingespannt ist. In Fig. 1 rechts neben dem Ständer 1 befindet sich ein Werkzeug-Kettenmagazin 10 mit einer Vielzahl von in die umlaufende Magazinkette eingehängten vertikal ausgerichteten Werkzeugen 11. Durch Antrieb der Magazinkette kann jeweils eines der Werkzeuge 11 in eine Werkzeugwechselposition verfahren werden.

In Fig. 1 unterhalb des Kettenmagazins 10 ist ein Werkzeugwechsler 13 ebenfalls seitlich neben dem Maschinenständer 1 in schräger horizontaler Ausrichtung angeordnet, der auf einem Unterbau 14 einen Schlitten 15 aufweist. Dieser Schlitten 15 ist mittels eines Motor-Spindeltriebes 16 auf dem Unterbau 14 in Richtung des Doppelpfeils verfahrbar und bildet ein Gehäuse 17. Am freien Ende des Schlittens 15 ist eine vertikal ausgerichtete Tragsäule 18 drehbar gelagert, an deren oberem Ende ein Werkzeug-Doppelgreifer 20 mit zwei diametralen Greiferzangen montiert ist.

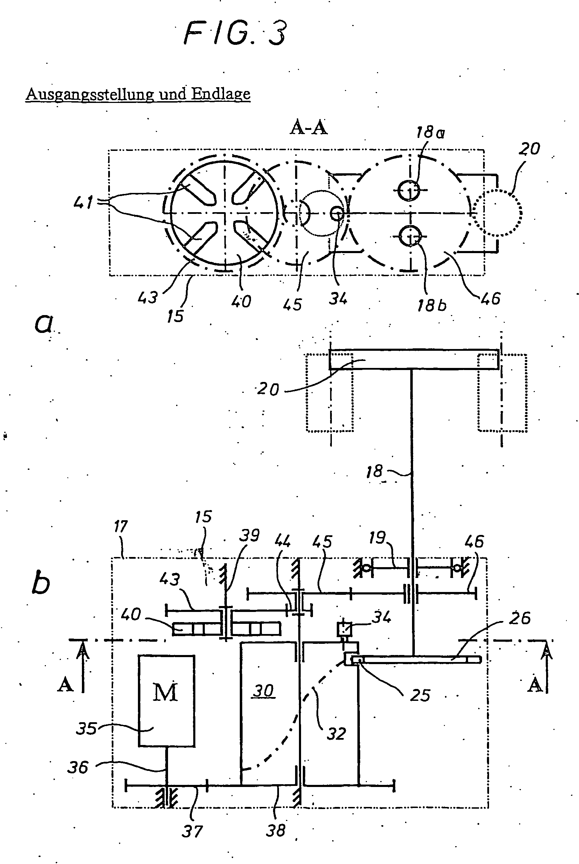

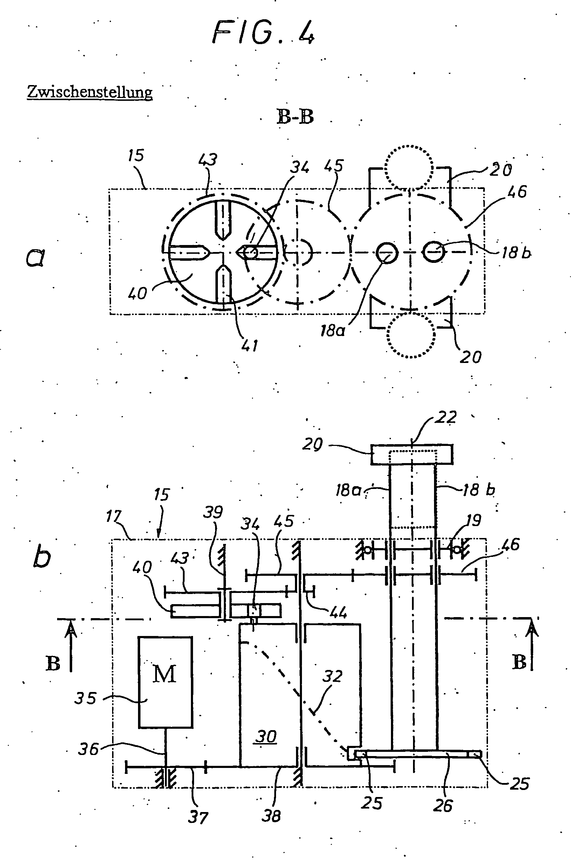

Wie aus Fig. 2 ersichtlich, besteht die Tragsäule 18 aus zwei zueinander parallelen Tragstreben 18a, 18b, deren untere Enden auf einer gemeinsamen Drehscheibe 19 befestigt sind und an deren oberem Ende der als Doppel-Greifer ausgebildete Werkzeug-Greifer 20 montiert ist. Die Tragsäule 18 ist in Richtung des Doppelpfeils 21 verfahrbar und um ihre Drehachse 22 um 180 ° verdrehbar (vgl. Fig. 3 und 4). Wie aus Fig. 2 ersichtlich, ist unter der Tragsäule 18 in ihrer Drehachse 22 eine Stabführung 23 vorgesehen, deren unteres Ende in einem Bodenlager 24 des Gehäuses 17 abgestützt ist. Auf dieser Stabführung 23 ist ein quer ausgerichtetes Element 26 gelagert, das mit dem unteren Ende der Tragsäule 18 verbunden ist und an seinen Enden Mitnehmer 25 aufweist. Im Gehäuse 17 ist seitlich neben der Stabführung 23 der Tragsäule 18 eine Kurventrommel 30 gelagert, deren Drehachse 31 parallel zur Drehachse 22 der Tragsäule 18 ausgerichtet ist. Auf der Umfangsfläche der Kurventrommel 30 ist eine nutförmige Hubkurve 32 ausgebildet, in welche der Mitnehmer 25 der Stangenführung 23 eingereift. Auf der oberen Stirnseite der Kurven- bzw. Hubtrommel 30 ist ein weiterer Mitnehmer 34 außermittig befestigt, der bei Drehung der Hubtrommel 30 mit einem im Folgenden beschriebenen Malteserrad 40 zusammenwirkt.

Im Gehäuse 17 des Schlittens 15 ist achsparallel zur Kurventrommel 30 im vorderen Teil ein elektrischer Antriebsmotor 35 angeordnet, dessen Abtriebswelle 36 ein Zahnrad 37 trägt, das mit einem weiteren Zahnrad 38 am unteren Ende der Hubtrommel 30 in Eingriff steht. Die Zahnradpaarung 37, 38 bildet ein Vorgelege-Getriebe, über das die Hubtrommel 30 vom Elektromotor 35 angetrieben wird.

Auf einer in der Deckplatte des Schlittengehäuses 17 gelagerten achsparallelen zur Trommelachse 31 ausgerichteten Welle 39 ist ein Malteserrad 40 befestigt, das in den Figuren 3a, 4a schematisch dargestellt ist. Der auf der Oberseite der Kurven- bzw. Hubtrommel 30 befestigte Mitnehmer 34 kann in einen der Radialschlitze 41 des Malteserrades 40 eingreifen und dieses in Drehung versetzen, wie dies in Fig. 4 dargestellt ist. Mit dem Malteserrad 40 ist ein koaxial gelagertes Zahnrad 43 fest verbunden, das mit einem auf der Welle 31 der Kurven- bzw. Hubtrommel 30 gelagerten Ritzel 44 in Eingriff steht. Mit diesem Ritzel 44 ist ein Zahnrad 45 fest verbunden, das mit einem weiteren Zahnrad 46 in Eingriff steht. Die Zahnräder 43 bis 46 bilden ein Zwischengetriebe.

Wie den Figuren 3 und 4 entnehmbar, sind die Kurventrommel 30, die Tragsäule 18, das Malteserrad 40, der Antriebsmotor 35 und die Zahnräder des Vorgeleges sowie des Zwischengetriebes in dem gemeinsamen Gehäuse 17 mit jeweils vertikalen und zueinander in einer Reihe parallelen Achsen angeordnet.

Insbesondere aus den Figuren 3 und 4 wird einer der wesentlichen Vorteile des erfindungsgemäßen Werkzeugwechslers ersichtlich, nämlich die relativ geringe Breite. Diese langgestreckte schmale Form ermöglicht eine in Fig. 1 dargestellte schräge Ausrichtung des Werkzeugwechslers zur Werkzeugmaschine bzw. zu deren Arbeitsraum in der Horizontalen. Erreicht wird diese geringe Breite durch die Anordnung der Einzelkomponenten, d.h. der Tragsäule 18, der Kurven- bzw. Hubtrommel 30, des Malteserrades 40 und des Antriebsmotors 35 in einer Reihe hintereinander. Der angestrebt geringe Durchmesser der Kurven- bzw. Hubtrommel 30 wird erreicht durch die Ausbildung der Hubkurve 32 auf der Trommelumfangsfläche und des in das Malteserrad 40 eingreifenden Mitnehmers 34 auf der oberen Stirnfläche der Kurven- bzw. Hubtrommel 30.

Wie aus Fig. 3 ersichtlich, befinden sich die Tragsäule 18 und der Werkzeug-Greifer 20 in der obersten Ausgangslage, in welcher der Mitnehmer 25 in den obersten Abschnitt der Hubkurve 32 an der Hubtrommel 30 eingreift und der auf der Stirnseite der Hubtrommel 30 angeordnete Mitnehmer 34 in der dem Malteserrad 40 gegenüberliegenden Position steht. Durch Aktivieren des elektrischen Antriebsmotors 35 wird die Hubtrommel 30 über das Vorgelege 37, 38 in die in Fig. 4 dargestellte Zwischenstellung verdreht, in welcher sich die Tragsäule 18 und damit auch der Werkzeug-Greifer 20 in seiner untersten Stellung befinden. Durch die halbe Drehung der Hubtrommel 30 ist der Mitnehmer 34 in die diametral gegenüberliegende Stellung gelangt und in einen der Radialschlitze 41 des Malteserrades 40 eingeschoben. Die auf das Malteserrad 40 übertragene Drehbewegung wird über die Zahnradsätze 43 bis 46 auf die Tragsäule 18 und damit auch auf die Werkzeug-Greifer 20 übertragen. Die sich dabei ergebende Hub-Schwenk-Bewegung des Werkzeug-Greifers 20 ist eine durchgehende Bewegung, die schnelle automatische Werkzeugwechsel bei relativ geringem Platzbedarf ermöglicht. Der Werkzeugwechsler 13 mit seinem Hub-Schwenkgetriebe ist kompakt ausgebildet und nimmt einen geringen Bauraum ein. Dadurch kann der u.a. den Werkzeug-Greifer tragende Schlitten 15 schmal ausgebildet werden, d.h. nur geringfügig breiter als der maximale Durchmesser der einzuwechselnden Werkzeuge sein.

Die Erfindung ist nicht auf das in der Zeichnung dargestellte und vorstehend beschriebene Ausführungsbeispiel beschränkt. So kann der Unterbau des Werkzeugwechslers die ortsfeste Tragkonstruktion für das Gehäuse 17 bzw. die Funktionsteile des Werkzeugwechslers bilden, d.h. statt des Schlittens 15 kann das Gehäuse 17 auf dem Unterbau 14 fest montiert sein. In diesem Fall werden die bei einem Werkzeugwechsel notwendigen Horizontalbewegungen zwischen der Werkzeugaufnahme in der Arbeitsspindel und dem jeweiligen Werkzeuggreifer von der Arbeitsspindel bzw. dem Fräskopf ausgeführt. Daneben kann auch die Kurven- bzw. Hubtrommel 30 im Gehäuse 17 vor dem Antriebsmotor 35 in einer Reihe mit diesem und mit der Tragsäule 18 angeordnet sein.

## Patentansprüche

1. Werkzeugwechsler für Werkzeugmaschinen mit
- mindestens einem verdrehbaren Werkzeug-Greifer (20), der drehfest auf einer heb- und senkbaren sowie um eine Drehachse (22) verdrehbaren Tragsäule (18) montiert ist, und
- einem Antriebsmotor (35) mit nachgeordnetem mechanischem Kurvengetriebe für die Hubbewegung und die Drehbewegung der Tragsäule (18), das als Hubantrieb der Tragsäule (18) eine Kurventrommel (30) mit einer in ihrer Umfangsfläche ausgebildeten Hubkurve (32) aufweist, in die ein mit der Tragsäule (18) mechanisch gekoppelter Mitnehmer (25) eingreift, wobei das Kurvengetriebe ferner ein vom Antriebsmotor (35) angetriebenes Schwenkgetriebe aufweist, das einen Drehantrieb für die Tragsäule (18) und damit auch für den Werkzeug-Greifer (20) darstellt,
**dadurch gekennzeichnet, dass**
- das Schwenkgetriebe ein Malteserradgetriebe (34, 39, 40, 41) mit einem Malteserrad (40) und einem in dessen Radialschlitze (41) eingreifenden Treiber (34) sowie ein Zwischengetriebe (43 bis 46) enthält, das eingangsseitig mit dem Malteserrad (40) und ausgangsseitig mit der Tragsäule (18) kinematisch verbunden ist,
- auf der oberen Stirnseite der Kurventrommel (30) ein Treiber (34) des Malteserradgetriebes außermittig angeordnet ist, der bei Drehung der Kurventrommel (30) das Malteserrad (40) durch Eingriff in dessen Radialschlitze (41) verdreht, und
- das Malteserrad (40), die Kurventrommel (30) und die Tragsäule (18) des Werkzeug-Greifers (20) achsparallel hintereinander angeordnet sind.

2. Werkzeugwechsler nach Anspruch 1,
**dadurch gekennzeichnet, dass**
die Kurventrommel (30), die Tragsäule (18), das Malteserrad (40), der Antriebsmotor (35) und das Zwischengetriebe (43 bis 46) in einem gemeinsamen Gehäuse (17) mit jeweils vertikalen und zueinander parallelen Achsen angeordnet sind.

3. Werkzeugwechsler nach Anspruch 2,
**dadurch gekennzeichnet, dass**
das Gehäuse (17) Teil eines auf einem schmalen, ortsfesten Unterbau (14) motorisch längsverfahrbaren Schlittens (15) ist.

4. Werkzeugwechsler nach Anspruch 2,
**dadurch gekennzeichnet, dass**
das Gehäuse (17) auf einem ortsfesten, schmalen und langgestreckten Unterbau fest montiert ist.

5. Werkzeugwechsler nach einem der vorstehende n Ansprüche,
**dadurch gekennzeichnet, dass**
der Tragsäule (18) eine Stabführung (23) zugeordnet ist, die am radial äußeren Ende eines quer ausgerichteten Elements (26) den in die nutförmige Hubkurve (32) eingreifenden Mitnehmer (25) aufweist.

6. Werkzeugwechsler nach einem der vorstehenden Ansprüche,
**dadurch gekennzeichnet, dass**
der Antriebsmotor (35) im Gehäuse (17) vor der Kurventrommel (30) angeordnet ist.

7. Werkzeugwechsler nach einem der vorstehenden Ansprüche,
**dadurch gekennzeichnet, dass**
der Antriebsmotor (35) die Kurventrommel (30) über ein Vorgelege (37, 38) antreibt.

8. Werkzeugwechsler nach einem der vorstehenden Ansprüche,
**dadurch gekennzeichnet, dass**
das Zwischengetriebe (43 bis 46) im Gehäuse (17) zur Übersetzung der Drehbewegung des Malteserrads (40) vorgesehen ist und seine Zahnradsätze (43 bis 46) in einer Reihe achsparallel hintereinander im Gehäuse (17) angeordnet sind.

9. Werkzeugwechsler nach einem der vorstehenden Ansprüche,
**dadurch gekennzeichnet, dass**
die Tragsäule (18) zwei zueinander parallele Tragstreben (18a, 18b) sowie eine im Gehäuse des Schlittens (15) angeordnete Stabführung (23) aufweist, auf der der Mitnehmer (25) über ein Querglied (26) axial verschiebbar angeordnet ist.

## Claims

1. Tool changer for machine tools, having
- at least one rotatable tool gripper (20) which is mounted in a rotationally-fixed manner on a support column (18) which can be lifted and lowered and can be rotated about a rotational axis (22), and
- a drive motor (35) having a mechanical cam mechanism disposed downstream for the lifting movement and rotating movement of the support column (18), which cam mechanism comprises, as a lifting drive for the support column (18), a barrel cam (30) having a lifting arc (32) formed in its peripheral surface, into which an entrainer (25), which is mechanically coupled with the support column (18), engages, wherein the cam mechanism further comprises a turning gear driven by the drive motor (35) and representing a rotary drive for the support column (18) and thus also for the tool gripper (20),
**characterised in that**
- the turning gear contains a Geneva wheel drive (34, 39, 40, 41) having a Geneva wheel (40) and a driver (34) engaging into its radial slots (41) as well as an intermediate gear (43 to 46) which is kinematically connected on the input side to the Geneva wheel (40) and on the output side to the support column (18),
- a driver (34) of the Geneva wheel drive is disposed eccentrically on the upper end side of the barrel cam (30) and rotates the Geneva wheel (40) by way of engagement in its radial slots (41) upon rotation of the barrel cam (30), and
- the Geneva wheel (40), the barrel cam (30) and the support column (18) of the tool gripper (20) are disposed one behind the other in an axis-parallel manner.

2. Tool changer as claimed in Claim 1, **characterised in that** the barrel drum (30), the support column (18), the Geneva wheel (40), the drive motor (35) and the intermediate gear (43 to 46) are disposed in a common housing (17) having axes which are in parallel with each other and are each vertical.

3. Tool changer as claimed in Claim 2, **characterised in that** the housing (17) is part of a carriage (15) which is longitudinally displaceable in a motor-driven manner on a narrow positionally-fixed sub-frame (14).

4. Tool changer as claimed in Claim 2, **characterised in that** the housing (17) is fixedly mounted on a positionally-fixed, narrow and elongated sub-frame.

5. Tool changer as claimed in any one of the preceding Claims, **characterised in that** the support column (18) is allocated a bar guide (23) which comprises the entrainer (25), engaging into the groove-shaped lifting arc (32), on the radial outer end of a transversely aligned element (26).

6. Tool changer as claimed in any one of the preceding Claims, **characterised in that** the drive motor (35) is disposed in the housing (17) upstream of the barrel cam (30).

7. Tool changer as claimed in any one of the preceding Claims, **characterised in that** the drive motor (35) drives the barrel cam (30) via a gear reducer (37, 38).

8. Tool changer as claimed in any one of the preceding Claims, **characterised in that** the intermediate gear (43 to 46) is provided in the housing (17) for transforming the rotary movement of the Geneva wheel (40) and its toothed wheel sets (43 to 46) are disposed in the housing (17) one behind the other in a row in an axis-parallel manner.

9. Tool changer as claimed in any one of the preceding Claims, **characterised in that** the support column (18) comprises two mutually parallel support struts (18a, 18b) and a bar guide (23) which is disposed in the housing of the carriage (15) and on which the entrainer (25) is disposed so as to be axially displaceable via a crossmember (26).

## Revendications

1. Changeur d'outils pour machines outils, comprenant
- au moins un dispositif de préhension d'outils rotatif (20), qui est monté de manière rigide en torsion sur une colonne support (18) rotative autour d'un axe de rotation (22) et pouvant être élevée et abaissée, et
- un moteur d'entraînement (35) comprenant un engrenage à came mécanique monté à l'arrière, pour le mouvement d'élévation et de rotation de la colonne support (18), présentant à titre d'entraînement de course de la colonne support (18) une came cylindrique (30) avec une came de course (32) formée sur sa surface périphérique, dans laquelle rentre en prise un suiveur de came (25) couplé mécaniquement avec la colonne support (18), où l'engrenage à came comprend en outre un engrenage orientable entraîné par le moteur d'entraînement (35), qui constitue un entraînement rotatif pour la colonne support (18) et donc aussi pour le dispositif de préhension d'outils (20),
**caractérisé en ce que**
- l'engrenage orientable comprend un engrenage à roue de Malte (34, 39, 40, 41) avec une roue de Malte (40) et un poussoir (34) venant en prise dans sa fente radiale (41) ainsi qu'un engrenage intermédiaire (43 à 46), qui est relié cinématiquement du côté entrée à la roue de Malte (40) et du côté sortie à la colonne support (18),
- un poussoir (34) de l'engrenage à roue de Malte, qui met en rotation la roue de Malte (40) en venant en prise dans sa fente radiale (41) lors de la rotation de la came cylindrique (30), est disposé en dehors du centre sur la face frontale supérieure de la came cylindrique (30), et
- la roue de Malte (40), la came cylindrique (30) et la colonne support (18) du dispositif de préhension d'outils (20) sont disposées dans un parallélisme d'axe les unes derrière les autres.

2. Changeur d'outils selon la revendication 1, **caractérisé en ce que** la came cylindrique (30), la colonne support (18), la roue de Malte (40), le moteur d'entraînement (35) et l'entraînement intermédiaire (43 à 46) sont disposés dans un boîtier commun (17) avec des axes respectivement verticaux et parallèles les uns aux autres.

3. Changeur d'outils selon la revendication 2, **caractérisé en ce que** le boîtier (17) fait partie d'un chariot (15) pouvant être déplacé longitudinalement à l'aide d'un moteur sur un châssis inférieur (14) fixe et étroit.

4. Changeur d'outils selon la revendication 2, **caractérisé en ce que** le boîtier (17) est monté de manière fixe sur un châssis inférieur, fixe, étroit et longitudinal.

5. Changeur d'outils selon l'une des revendications précédentes, **caractérisé en ce qu'**une glissière (23), qui comprend le suiveur de came (25) venant en prise dans la came de course (32) en forme de rainure à l'extrémité externe radialement d'un élément (26) orienté à la transversale, est associée à la colonne support (18).

6. Changeur d'outils selon l'une des revendications précédentes, **caractérisé en ce que** le moteur d'entraînement (35) est disposé dans le boîtier avant la came cylindrique (30).

7. Changeur d'outils selon l'une des revendications précédentes, **caractérisé en ce que** le moteur d'entraînement (35) entraîne la came cylindrique (30) par le biais d'une avancée (37, 38).

8. Changeur d'outils selon l'une des revendications précédentes, **caractérisé en ce que** l'engrenage intermédiaire (43 à 46) est prévu dans le boîtier (17) pour traduire le mouvement rotatif de la roue de Malte (40) et ses jeux de roues dentées (43 à 46) sont disposés dans le boîtier (17) en rang selon un axe parallèle les uns derrière les autres.

9. Changeur d'outils selon l'une des revendications précédentes, **caractérisé en ce que** la colonne support (18) comprend deux plans supports parallèles l'un à l'autre (18a, 18b) et une glissière (23) disposée dans le boîtier du chariot (15) sur laquelle est disposé le suiveur de came (25) de manière à coulisser axialement par le biais d'un organe transversal (26).
